# EUROPEAN PATENT APPLICATION

(11) **EP 3 832 833 A1**
(43) Date of publication of application: **09.06.2021**
(21) Application number: 19214139.8
(22) Date of filing: 06.12.2019
(51) Int. Cl.: H02J 7/00, H02J 50/00, H02J 50/10, H02J 50/70, H05K 9/00

(54) **WIRELESS ELECTRIC CHARGING UNIT AND SYSTEM**

(71) Applicant: Koninklijke Philips N.V., 5656 AG Eindhoven (NL)
(72) Inventor: Messaoud, Jasmina, 5656 AE Eindhoven (NL); Veltman, Eddy Gerrit, 5656 AE Eindhoven (NL)
(74) Representative: Philips Intellectual Property & Standards

(57) **Abstract**

A wireless electric charging unit has a transmitter electric coil for generating an electromagnetic field for wireless power transfer to an electrically chargeable device, a charging surface at a first main side of the transmitter electric coil, and a magnetic shielding layer at a second main side of the transmitter electric coil. The charging surface bounds a charging area where the chargeable device can be placed. A coil driving circuit of the charging unit is electrically connected to the transmitter electric coil and is arranged in a position which is not between the magnetic shielding layer and the charging surface. The charging unit further has a display device having a display layer for generating a display output and a display driving circuit electrically connected to said display layer for driving the display layer. The display layer is arranged between the transmitter electric coil and the charging surface, so that the display layer overlaps with the charging surface. The display driving circuit is arranged in a position which is not between the magnetic shielding layer and the charging surface. This separation of the display layer and display driving circuit enables the display layer to be arranged in an overlapping position with the transmitter electric coil. Thus, the display layer is visible via the charging surface when the chargeable device is not in the charging area.

## Description

### FIELD OF THE INVENTION

This invention relates to wireless electrical charging units, for example for charging hand held appliances or devices, wherein the charging unit comprises a display device.

### BACKGROUND OF THE INVENTION

There is a trend for hand held devices, such as personal care devices, to become increasingly connected. In practice, this often means that devices like shavers, groomers and toothbrushes give real time user feedback while the user is using the product.

For example, it is known to provide an electric toothbrush with a separate display module that can be mounted on a bathroom mirror. During brushing, the display provides information about coverage of the teeth. In this way, the user is given guidance to ensure that there is effective brushing at a correct rate.

Another trend for hand held devices, again such as personal care devices, is to provide a battery operated device with wireless recharging capability. There are standards for such wireless charging functionality, such as the Qi standard. This is an open interface standard that defines a wireless power transfer protocol, using inductive charging over distances of up to 4 cm. The system uses a base station and a compatible device, which is placed on top of the base station, thereby charging via inductive coupling. The use of inductive wireless charging for hand held devices is becoming increasingly common.

For example, shavers and other grooming devices are known which make use of wireless charging. The benefit of wireless charging, for example using the Qi standard, is that the product is chargeable on any Qi compatible charger. Thus, a base station for charging may be provided in hotel rooms, which is suitable for any Qi compliant device of guests from anywhere around the world. Furthermore, it allows multiple different chargeable products to be charged using a shared base station.

It would be desirable to combine the charging function of the base station with a display function, to form a multi-function base station. It is known to provide a display area at a peripheral area of a base station, with the charging region in a central area of the base station. The display may for example be used to give information about the charging process. Thus, it is known to provide a wireless electric charging unit with an integrated display which is active during charging and which is arranged adjacent to the charging area where the device being charged is to be placed.

For such known wireless electric charging units having an integrated display, it would be desirable to enable the display function while the chargeable device is in use, i.e. not placed in the charging position on the charging unit. Furthermore, it would then be desirable to enable the charging area, at which the chargeable device is to be placed for being charged, to function as part of (or all of) the display, thereby maximizing the available display area and enabling smaller overall dimensions of the charging unit design for a given display size.

A technical problem then arises that a standard display cannot be mounted on top of an inductive charging coil because the circuit board of the display, comprising the display driving circuit, will provide too much interference with the magnetic field generated by the inductive charging coil. The copper in the display printed circuit board will reduce the coupling factor between the inductive charging transmitter electric coil and a receiver coil in the hand held device being charged, and it will decrease the quality factor of the inductive charging transmitter electric coil.

This results in increased heating and reduced sensitivity for foreign object detection of the inductive charging transmitter electric coil. Furthermore, the display driving circuit will suffer from noise in its circuit caused by the magnetic field from the inductive charging transmitter electric coil.

There is therefore a need for an improved wireless electric charging unit with an integrated display, which enables the charging area to be used as a display when the chargeable device is not arranged in the charging area, but without compromising the performance of the display circuitry and the performance of the wireless power transfer function.

### SUMMARY OF THE INVENTION

The invention is defined by the claims.

According to the invention, there is provided a wireless electric charging unit comprising:
a transmitter electric coil for generating an electromagnetic field for wireless power transfer to an electrically chargeable device, said transmitter electric coil comprising first and second main sides opposite to each other;
a charging surface arranged at said first main side of the transmitter electric coil and bounding a charging area arranged for accommodating said electrically chargeable device;
a magnetic shielding layer arranged at said second main side of the transmitter electric coil;
a coil driving circuit electrically connected to said transmitter electric coil for driving the transmitter electric coil, said coil driving circuit being arranged in a position which is not between the magnetic shielding layer and the charging surface; and
a display device comprising a display layer for generating a display output and a display driving circuit electrically connected to said display layer for driving the display layer, wherein:
   the display layer is arranged at the first main side of the transmitter electric coil in a position between the transmitter electric coil and the charging surface; and
   the display driving circuit is arranged in a position which is not between the magnetic shielding layer and the charging surface.

The wireless electric charging unit according to the invention has a display (i.e. the combination of the display layer and the display driving circuit) of which the display layer, that actually generates the visible display output, occupies at least part of the area of the charging surface. In other words, when seen in a direction perpendicular to the charging surface, the display layer partially or fully overlaps with the first main side of the transmitter electric coil, since the display layer is arranged in a position between the transmitter electric coil and the charging surface. In this way, a compact integration of the display device into the wireless electric charging unit is achieved. Since the display layer is arranged at the first main side of the transmitter electric coil, the display layer is not covered by the transmitter electric coil and remains visible via the charging surface, provided that the charging surface is transparent. The display function is for example used when a rechargeable device is in use, i.e. when the rechargeable device is not arranged in the charging area for being recharged. When the rechargeable device is arranged in the charging area, the rechargeable device itself may be used to present output information (e.g. charging level information) via its own display instead of via the display device of the charging unit. However, a periphery of the display layer of the charging unit may be used, when the rechargeable device is in the charging area, in embodiments wherein the display layer is made larger that the area covered by the chargeable device in the charging area.

The charging surface may be a surface of the display layer.

To avoid interference between the display driving circuit and the electromagnetic field generated by the transmitter electric coil, the display driving circuit is separated from the display layer, and the display driving circuit is arranged in a position remote or shielded from the electromagnetic field of the transmitter electric coil. This is achieved based on a physical location of the display driving circuit in a position which is not between the magnetic shielding layer and the charging surface. One option is to arrange the display driving circuit laterally offset from the transmitter electric coil. In this option, seen in a direction perpendicular to the charging surface, the display driving circuit is arranged in a position adjacent to and remote from the transmitter electric coil and the magnetic shielding layer, i.e. in a non-overlapping position with the transmitter electric coil and the magnetic shielding layer. This option prevents said interference, since the electromagnetic field of the transmitter electric coil is generated mainly perpendicularly to the main sides of the transmitter electric coil. Another option is to separate the display driving circuit and the display layer by the magnetic shielding layer. In this option, the display driving circuit is arranged at a side of the magnetic shielding layer opposite to, i.e. facing away from the transmitter electric coil.

The display layer may be designed such that it provides a limited disturbance to the electromagnetic field of the transmitter electric coil, based on the use of sufficiently thin metal layers.

The display layer for example comprises a transparent layer and a pixel array provided on the transparent layer. The pixel array may comprise a thin film circuit and the transparent layer may comprise a glass layer.

The pixel array may comprise an array of LCD pixels. Experiments have demonstrated that the disturbance to the electromagnetic field of the transmitter electric coil by such a display layer is acceptably small. The magnetic shielding layer for example comprises a ferrite layer.

In a first set of examples, the magnetic shielding layer may have a first main side facing the transmitter electric coil and a second main side opposite to the first main side of the magnetic shielding layer and remote from the transmitter electric coil, wherein at least one of the coil driving circuit and the display driving circuit is arranged at said second main side of the magnetic shielding layer.

The magnetic shielding layer thus effectively shields one or both of the coil driving circuit and the display driving circuit from the electromagnetic field generated by the transmitter electric coil. Both circuits may be arranged at the second main side of the magnetic shielding layer, for example on a common printed circuit board.

In a second set of examples, when seen in a direction perpendicular to the charging surface, at least one of the coil driving circuit and the display driving circuit is arranged in a position adjacent to and remote from the transmitter electric coil and the magnetic shielding layer and non-overlapping with the transmitter electric coil and the magnetic shielding layer.

This provides a lateral offset between one or both of the coil driving circuit and the display driving circuit and the combination of the transmitter electric coil and the magnetic shielding layer. By "lateral offset" is thus meant a spacing in a direction parallel to the charging surface. By such a lateral offset, the respective circuit or circuits are arranged sufficiently remote from the transmitter electric coil such as not to interfere with the electromagnetic field of the transmitter electric coil.

In both of these sets of examples, the coil driving circuit and the display driving circuit may be arranged on a common printed circuit board.

The display layer for example extends across at least 80% of an area of the charging area. This provides a compact arrangement, in which all of, or almost all of, the charging area may also be used for the display function.

The wireless electric charging unit according to the invention may further comprise a semi-transparent mirror layer arranged between the display layer and the charging surface. The combination of the semi-transparent mirror layer and the display layer functions, in a known way, as a so-called smart mirror which, in the absence of a visible display output of the display layer, appears as a usual mirror. In addition to the mirror function, a display output may be generated by the display layer which is visible by a user via the semi-transparent mirror layer. The charging surface may then comprise an outer surface of the semi-transparent mirror layer. In embodiments wherein the mirror layer is to be arranged in a vertical orientation, the charging surface may be provided with suitable holding or clamping means for holding the chargeable device in a suitable position relative to the charging surface.

The semi-transparent mirror layer and the display layer may extend, in a direction parallel to the charging surface, beyond the transmitter electric coil and the magnetic shielding layer. In this embodiment, when seen in a direction perpendicular to the charging surface, the coil driving circuit and the display driving circuit may be arranged in positions adjacent to and remote from the transmitter electric coil and the magnetic shielding layer and non-overlapping with the transmitter electric coil and the magnetic shielding layer, but overlapping with the semi-transparent mirror layer and/or the display layer.

The display driving circuit may be configured to activate the display layer upon removal of the electrically chargeable device from the charging area and/or to deactivate the display layer upon placement of the electrically chargeable device in the charging area. Thus, the display function may be controlled automatically in dependence on the presence or absence of a chargeable device in the charging area.

The invention also provides a wireless electric charging system comprising:
a wireless electric charging unit as defined above;
a portable electrically chargeable device comprising a receiver electric coil for receiving the electromagnetic field of the transmitter electric coil of the wireless electric charging unit when the electrically chargeable device is accommodated in the charging area of the wireless electric charging unit.

Thus, the invention provides a system of a charger and a device to be inductively charged.

The portable electrically chargeable device is for example a personal care device, such as an electric shaver or toothbrush. It may be any kind of portable electrically chargeable device, such as an inductively chargeable smart phone.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 shows a conventional wireless electric charging system comprising a portable electrically chargeable device and a conventional wireless electric charging unit;
Fig. 2 schematically shows a typical configuration of the electric components of the charging unit of Fig. 1;
Fig. 3 shows a first example of a wireless electric charging unit in accordance with the invention; and
Fig. 4 shows a second example of a wireless electric charging unit in accordance with the invention.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a wireless electric charging unit which has a transmitter electric coil for generating an electromagnetic field for wireless power transfer to an electrically chargeable device, a charging surface at a first main side of the transmitter electric coil, and a magnetic shielding layer at a second main side of the transmitter electric coil. The charging surface bounds a charging area where the chargeable device can be placed. A coil driving circuit of the charging unit is electrically connected to the transmitter electric coil and is arranged in a position which is not between the magnetic shielding layer and the charging surface. The charging unit further has a display device having a display layer for generating a display output and a display driving circuit electrically connected to the display layer for driving the display layer. The display layer is arranged between the transmitter electric coil and the charging surface, so that the display layer overlaps with the charging surface. The display driving circuit is arranged in a position which is not between the magnetic shielding layer and the charging surface. This separation of the display layer and display driving circuit enables the display layer to be arranged in an overlapping position with the transmitter electric coil. Thus, the display layer is visible via the charging surface when the chargeable device is not in the charging area.

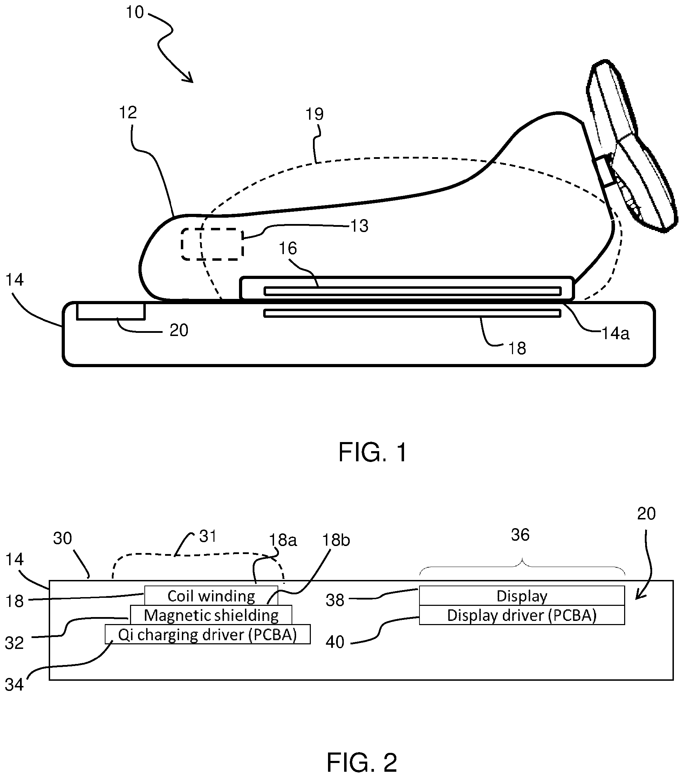

Fig. 1 shows a conventional wireless electric charging system 10 comprising a portable electrically chargeable device 12 and a conventional wireless electric charging unit 14. The charging unit 14 has a charging area 19 wherein the device 12 is placed to recharge its battery 13. The charging area 19 is a space bounded by a charging surface 14a of the charging unit 14 and is arranged for accommodating the chargeable device 12. In the charging unit 14, the charging area 19 is above the charging surface 14a. The charging unit 14 is typically a mains powered unit.

In the example shown, the chargeable device 12 is an electric shaver, but it may be any wirelessly chargeable portable device such as a personal care device (e.g. a toothbrush, a shaver, an epilator, a beard trimmer, a facial brush etc.) or it may be any other wirelessly chargeable device, such as a smart phone, a torch, a power tool etc.

The chargeable device 12 has a receiver electric coil 16 for receiving an electromagnetic field generated by a transmitter electric coil 18 of the wireless electric charging unit 14, when the portable electrically chargeable device 12 is accommodated in the charging area 19 of the charging unit 14. When the charging surface 14a is oriented in a horizontal position, as shown in Fig. 1, the chargeable device 12 may for example just be placed on the charging surface 14a without any further physical coupling with the charging unit 14. Alternatively, when the charging surface is oriented in an oblique or vertical position, the chargeable device 12 may be coupled to the charging unit 14 by a coupling system, for example a mechanical or magnetic coupling system.

It is desirable to provide the charging unit with a display function, so that it may for example report on the state of the charging process. Fig. 1 shows a display device 20 which is positioned laterally offset (i.e. at a different position when viewed from above, i.e. perpendicular to the charging surface) from the transmitter electric coil 18 and the charging surface 14a.

Fig. 2 schematically shows a typical configuration of the electric components of the charging unit 14 of Fig. 1.

The transmitter electric coil 18 is shown. It has a first main side 18a facing outwardly towards the charging surface 30 of the charging unit 14 (i.e. upwards in Fig. 2), and a second main side 18b opposite to the first main side 18a and facing inwardly (i.e. downwards in Fig. 2). The transmitter electric coil 18 is typically a copper wire coil.

The charging surface 30 of the charging unit 14 is thus arranged at the first main side of the transmitter electric coil 18 and bounds the charging area 31 arranged for accommodating the portable electrically chargeable device 12.

A magnetic shielding layer 32 is arranged at the second main side 18b of the transmitter electric coil 18. Seen from above the charging unit 14 in Fig. 2, the magnetic shielding layer 32 is behind the transmitter electric coil 18, i.e. on the opposite side to the charging surface 30. The magnetic shielding layer 32 may be a ferrite layer, but alternatively an electrically conductive layer may be used. The magnetic shielding layer 32 forms a magnetic shield that prevents the electromagnetic field from the transmitter electric coil 18 from penetrating in the downward direction in Fig. 2. This has several purposes. First, it prevents interference of the electromagnetic field with the electronics on the coil driving circuit 34 beneath the shielding layer 32 (discussed below). Second, it increases the electromagnetic coupling factor between the transmitter electric coil 18 and the receiver electric coil 16 in the device that is to be charged. Third, it prevents malfunction when the charging unit 14 stands on a metal surface.

The coil driving circuit 34 (shown in the figures as a "Qi charging driver (PCBA)") is electrically connected to the transmitter electric coil 18 for driving the transmitter electric coil 18. The coil driving circuit is a printed circuit board assembly that contains the electronics for driving the inductive transmitter electric coil 18. The coil driving circuit 34 is arranged in a position which is not between the magnetic shielding layer 32 and the charging area 31. In particular, in this example the coil driving circuit 34 is on the opposite side of the magnetic shielding layer 32 to the transmitter electric coil 18. Thus, the coil driving circuit 34 is protected from the electromagnetic field generated by the transmitter electric coil 18 and, equally, the electromagnetic field is shielded from influences by the coil driving circuit 34.

The display device 20 has a display area 36 which is non-overlapping with the charging surface 30 and the transmitter electric coil 18, seen in the direction perpendicular to the charging surface 30. The display device 20 comprises a display layer 38 for generating a visible display output, and a display driving circuit 40 (shown in the figures as a "Display driver PCBA") electrically connected to said display layer 38 for driving the display layer 38.

Conventionally, as shown in Fig. 2, the display layer 38, i.e. the part of the display device 20 that actually generates the visible display output, and display driving circuit 40 are formed as a single module, for example with driver circuit chips mounted around a periphery of the display layer 38. The display layer 38 comprises a substrate, such as a glass or other transparent substrate, which carries a pixel array and row and column conductors which extend from the peripheral driver circuit chips to the individual pixels in the pixel array.

The display device may be a liquid crystal display (LCD) device using thin film technology, and includes various optical sheets (glass substrates, polarizers, diffusers etc.) as well as a backlight. The configuration of an LCD display module is totally routine and will be well known to those skilled in the art. Typically there is an LC material layer sandwiched between two transparent layers. The transparent layers are often made of glass, but transparent polymer layers may be used alternatively.

The display may instead be a LED display device, such as an OLED display device. It will again comprise a carrier which carries a pixel array and row and column conductors. This display does not need a backlight.

The display driving circuit 40 should also be arranged in a non-interfering position relative to the electromagnetic field generated by the transmitter electrical coil 18, because, like the coil driving circuit 34, it will interfere too much with the electromagnetic field. It should either be placed remote from the electromagnetic field or it should be magnetically shielded from it. Thus, the known solution is to have the charging surface 30, i.e. the part of the top surface of the charging unit 14 at which the electromagnetic field suitable for wireless power transfer is delivered, and the display area 36 as non-overlapping areas, for example side by side (i.e. laterally offset) as shown in Fig. 2.

This arrangement of the display area 36 does not make full use of the external surface of the charging unit 14. An arrangement of the display area 36 that makes better use or even full use of the external surface of the charging unit would be of interest when using the display device 20 of the charging unit 14 to give feedback about the chargeable device when the chargeable device is being used, rather than only when the chargeable device is being charged. Indeed, when the chargeable device is being charged, it is instead possible to use a display of the chargeable device itself to give charging status information. So there is particular interest in making better use or even full use of the charging surface 30 as a display area. This could for example avoid the need for the charging unit to be larger in area than the chargeable device, as is required by the arrangement of Fig. 1.

It could also give a high-tech experience when the display becomes active at the location of the charging surface when the chargeable device is picked-up from the charging unit.

However, a standard display module cannot be mounted on top of the transmitter electric coil, i.e. between the magnetic shielding layer and the charging surface, because the display circuit board would create too much interference with the electromagnetic field of the transmitter electric coil as mentioned above. The copper in the display circuit board will reduce the magnetic coupling factor between the transmitter electric coil and the receiver coil in the chargeable device and thereby reduce the quality factor.

The invention provides an arrangement for the charging unit in which the display device is split into a separate display layer and a separate display driving circuit. The display layer is arranged at the first main side of the transmitter electric coil in a position between the transmitter electric coil and the charging surface. The display driving circuit is arranged in a position which is not between the magnetic shielding layer and the charging surface.

This display layer of the charging unit in accordance with the invention overlaps at least partially with the charging surface and the transmitter electric coil, seen in the direction perpendicular to the charging surface. In this way, a compact combination of the charging function and the display function is achieved. The display function is for example used when the rechargeable device is in use, i.e. when the rechargeable device is not arranged in the charging area.

The display layer for example comprises a carrier (which will be transparent if light needs to pass through such as from a backlight) which carries thin film conductive tracks and electrode pads, which connect to a liquid crystal layer or a LED layer such as an OLED layer. The thin film conductive tracks for example comprise active matrix switching transistors (thin film transistors, TFTs). For a liquid crystal display, there may be a pair of transparent carriers with liquid crystal material sandwiched between, or in-plane switching may be used in which case there may be a single carrier.

Regardless of the display technology used, connections are required between the row and column conductors and the display driving circuit.

Typically, a Flexible Printed Circuit (FPC) cable is used to connect the display driving circuit to the thin film conductive tracks with via row and column connections. This FPC contains thin copper tracks that stop at the connections to the thin film conductive tracks.

The edge of the display layer containing the connections with the FPC to the display driving circuit is preferably positioned away from the transmitter electric coil to minimize interference. Also the copper tracks in the FPC are typically very thin which does not cause a significant amount of interference.

The display driving circuit printed circuit board should not be between the magnetic shielding layer and the charging surface for two main reasons:
1. A driver printed circuit board typically contains a lot of copper that will reduce the quality factor of the transmitter electric coil. Ground planes are typically used to reduce Electro Magnetic Interference (EMI) in order to meet requirements of Electro Magnetic Compatibility (EMC) regulations.
2. The driver printed circuit board has a thickness of several millimeters which will increase the distance between the magnetic shielding layer and the charging surface. This significantly decreases the coupling factor between the transmitter electric coil and the receiver electric coil.

To avoid an unallowable degree of interference between the display device and the electromagnetic field generated by the transmitter electric coil, the display driving circuit is magnetically shielded from the electromagnetic field of the transmitter electric coil. Alternatively, the display driving circuit may be arranged in a non-interfering position relative to the electromagnetic field sufficiently remote from the transmitter electric coil.

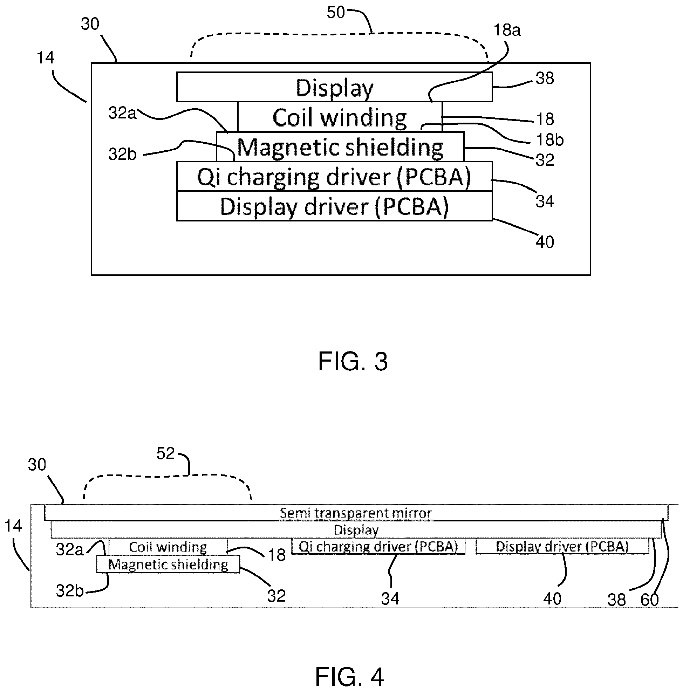

Fig. 3 shows a first example of the wireless electric charging unit 14 in according with the invention, in which the display driving circuit 40 and the display layer 38 are separated by the magnetic shielding layer 32. The same reference numbers are used as in Fig. 2. In this first example, the display driving circuit 40 is at the opposite side of the magnetic shielding layer 32 to the transmitter electric coil 18.

The display layer 38 (without the display driving circuit 40 which typically comprises discrete integrated circuits) creates minimal interference with the transmitter electric coil 18, such that it does not reduce the wireless power transfer function to an unacceptable degree.

There do remain two interference mechanisms between the primary functional parts of the display layer 38 and the transmitter electric coil 18.

A first interference mechanism is that the display layer 38 slightly increases the distance between the transmitter electric coil 18 and the charging surface 30 of the charging unit 14. A second interference mechanism is that the thin film metals in the display layer 38 will slightly influence the coupling factor and quality factor of the wireless power transfer system. However, these effects are both sufficiently small, such that they can either be neglected or compensated for during the calibration of the wireless power transfer function.

The charging surface 30 of the charging unit 14 according to the invention therefore overlaps with the display area, seen in the direction perpendicular to the charging surface 30. I.e., the charging area 50 is straight above the display area in Fig. 3. For example, the entire charging surface 30 may be covered by the display layer 38. The charging surface 30, and hence the display area, may occupy substantially all of the top surface of the charging unit.

Thus, the magnetic shielding layer 32 has a first main side 32a facing the transmitter electric coil 18 and a second main side 32b opposite to the first main side 32a of the magnetic shielding layer 32 and remote from the transmitter electric coil 18. In this example, both the coil driving circuit 34 and the display driving circuit 40 are arranged at the second main side 32b of the magnetic shielding layer 32.

The coil driving circuit and the display driving circuit 34, 40 may be formed as circuits on a single common printed circuit board.

Fig. 4 shows a second example of a wireless electric charging unit in accordance with the invention, in which there is a lateral offset between one or both of the coil driving circuit 34 and the display driving circuit 40, on the one hand, and the combination of the transmitter electric coil 18 and magnetic shielding layer 32 on the other hand. By a "lateral offset" is thus meant a spacing in a direction parallel to the charging surface 30. Thus, when seen in a direction perpendicular to the charging surface 30 (looking down the page onto the charging surface 30 in Fig. 4), at least one of the coil driving circuit 34 and the display driving circuit 40 is arranged in a position adjacent to and remote from the transmitter electric coil 18 and the magnetic shielding layer 32 and non-overlapping with the transmitter electric coil 18 and the magnetic shielding layer 40. In the example of Fig. 4, both the coil driving circuit 34 and the display driving circuit 40 are arranged in a laterally offset position relative to the transmitter electric coil 18 and the magnetic shielding layer 32.

In this example, the display layer 38 and, hence, the display area occupy a larger area than the charging surface 30, but the display layer 38 also overlaps to fully cover the charging surface 30. Thus the area of the charging surface 30 is fully contained within the display area.

The two coil driving circuit 34 and the display driving circuit 40 may again be formed as circuits on a single common printed circuit board.

In all examples, the display layer 38 for example extends across at least 80% of an area of the charging surface 30, for example across all of the area of the charging surface 30 or even extending fully over as well as beyond the charging surface 30 (as in Fig. 4). In all cases, this provides a compact arrangement, in which all (or almost all) of the area of the charging surface 30 may be used for charging and for displaying information.

Fig. 4 shows a further optional feature in which the charging unit 14 has a semi-transparent mirror layer 60 arranged between the display layer 38 and the charging surface 30. In this example, the semi-transparent mirror layer 60 fully covers the display layer 38 and, therefore, extend beyond the charging surface 30 like the display layer 38. The semi-transparent mirror layer 60 and the display layer 38 together function, in a known manner, as a so-called smart mirror wherein, in the absence of a visible display output from the display layer 38, the external surface of the charging unit 14 appears as a mirror. Visible display output may be generated on that mirror surface and will be visible through the semi-transparent mirror layer 60. The charging surface 30 comprises an outer surface of the semi-transparent mirror layer 60.

The semi-transparent mirror layer 60 for example corresponds in shape to the display layer 38. Thus, in the example of Fig. 4, the semi-transparent mirror layer 60 and the display layer 38 extend, in a direction parallel to the charging surface 30, beyond the transmitter electric coil 18 and the magnetic shielding layer 32.

The information from the display layer 18 is visible through the mirror layer 60, because the mirror layer 60 is semi-transparent. At locations where no light is delivered from the display layer 38, the mirror surface just behaves as a normal mirror. The semi-transparent mirror layer 60 is made of a thin metal film on a glass plate. In the same way as with the display layer 38, this metal film is so thin that the wireless power transfer function remains sufficiently effective. The chargeable device can thus be placed on the mirror surface. It then charges while information about the product and use cycle can be displayed by parts of the display layer 38 around the chargeable device and the charging surface 30. When the chargeable device is not arranged on the mirror surface, the display layer 38 can give real time feedback and indicate the charging location at which the chargeable device should be docked when it is to be recharged. It is noted that, in an example wherein the mirror surface has a vertical operating position, the charging unit 14 may be provided with suitable holding means for holding the chargeable device within the charging area 52 relative to the charging unit 14.

In the example of Fig. 4, the display driving circuit 40 may be configured to operate at least partly automatically. For example, the display driving circuit 40 may be configured to activate the display layer 38 upon removal of the electrically chargeable device from the charging area 52 and/or to deactivate the display layer 38 upon placement of the electrically chargeable device in the charging area 52. Detection of the presence of the chargeable device within the charging area 52, required to enable said automatic activation and/or deactivation of the display layer 18, may be done in a known matter by the coil driving circuit 34 by detecting the presence of the receiver electric coil 16 near the transmitter electric coil 18.

The invention is of interest for personal care products such as male grooming, female beauty, oral health care.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A wireless electric charging unit (14) comprising:
a transmitter electric coil (18) for generating an electromagnetic field for wireless power transfer to an electrically chargeable device (12), said transmitter electric coil comprising first and second main sides (18a, 18b) opposite to each other;
a charging surface (30) arranged at said first main side of the transmitter electric coil (18) and bounding a charging area (50,52) arranged for accommodating said electrically chargeable device (12);
a magnetic shielding layer (32) arranged at said second main side of the transmitter electric coil;
a coil driving circuit (34) electrically connected to said transmitter electric coil for driving the transmitter electric coil, said coil driving circuit (34) being arranged in a position which is not between the magnetic shielding layer (32) and the charging surface; and
a display device (20) comprising a display layer (38) for generating a display output and a display driving circuit (40) electrically connected to said display layer (38) for driving the display layer, **characterized in that**:
the display layer (38) is arranged at the first main side (18a) of the transmitter electric coil (18) in a position between the transmitter electric coil (18) and the charging surface (30); and
the display driving circuit (40) is arranged in a position which is not between the magnetic shielding layer (32) and the charging surface.

2. A wireless electric charging unit as claimed in claim 1, wherein the display layer (38) comprises a transparent layer and a pixel array provided on the transparent layer.

3. A wireless electric charging unit as claimed in claim 2, wherein the pixel array comprises a thin film circuit and the transparent layer comprises a glass layer.

4. A wireless electric charging unit as claimed in claim 3, wherein the pixel array comprises an array of LCD pixels or OLED pixels.

5. A wireless electric charging unit as claimed in any one of claims 1 to 4, wherein the magnetic shielding layer (32) comprises a ferrite layer.

6. A wireless electric charging unit as claimed in any one of claims 1 to 5, wherein the magnetic shielding layer (32) has a first main side (32a) facing the transmitter electric coil (18) and a second main side (32b) opposite to the first main side of the magnetic shielding layer and remote from the transmitter electric coil (18), and wherein at least one of the coil driving circuit (34) and the display driving circuit (40) is arranged at said second main side of the magnetic shielding layer.

7. A wireless electric charging unit as claimed in any one of claims 1 to 5, wherein, seen in a direction perpendicular to the charging surface (30), at least one of the coil driving circuit (34) and the display driving circuit (40) is arranged in a position adjacent to and remote from the transmitter electric coil (18) and the magnetic shielding layer (32) and non-overlapping with the transmitter electric coil (18) and the magnetic shielding layer.

8. A wireless electric charging unit as claimed in claim 6 or 7, wherein the coil driving circuit (34) and the display driving circuit (40) are arranged on a common printed circuit board.

9. A wireless electric charging unit as claimed in any one of claims 1 to 8, wherein the display layer (38) extends across at least 80% of an area of the charging surface (30).

10. A wireless electric charging unit as claimed in any one of claims 1 to 9, further comprising a semi-transparent mirror layer (60) arranged between the display layer (38) and the charging surface (30).

11. A wireless electric charging unit as claimed in claim 10, wherein the charging surface (30) comprises an outer surface of the semi-transparent mirror layer (60).

12. A wireless electric charging unit as claimed in claim 10 or 11, wherein the semi-transparent mirror layer (60) and the display layer (38) extend, in a direction parallel to the charging surface (30), beyond the transmitter electric coil (18) and the magnetic shielding layer (32).

13. A wireless electric charging unit as claimed in any of claims 1 to 12, wherein the display driving circuit (40) is configured to activate the display layer (38) upon removal of the electrically chargeable device (12) from the charging area (52) and/or to deactivate the display layer (38) upon placement of the electrically chargeable device in the charging area.

14. A wireless electric charging system (10) comprising:
a wireless electric charging unit (14) as claimed in any one of claims 1 to 13;
a portable electrically chargeable device (12) comprising a receiver electric coil (16) for receiving the electromagnetic field of the transmitter electric coil (18) of the wireless electric charging unit when the electrically chargeable device is accommodated in the charging area (52) of the wireless electric charging unit.

15. A wireless electric charging system as claimed in claim 14, wherein the portable electrically chargeable device (12) is a personal care device, such as an electric shaver or toothbrush.
